(19) Europäisches Patentamt
European Patent Office
Office européen des brevets

(11) **EP 2 979 342 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **13726709.2**

(22) Anmeldetag: **24.05.2013**

(51) Int Cl.:
*H02J 3/06* (2006.01)  *G06Q 50/06* (2012.01)
*H02J 3/16* (2006.01)  *H02J 3/00* (2006.01)
*G05F 1/66* (2006.01)  *H02J 3/14* (2006.01)

(86) Internationale Anmeldenummer:
**PCT/EP2013/060712**

(87) Internationale Veröffentlichungsnummer:
**WO 2014/187501 (27.11.2014 Gazette 2014/48)**

(54) **ENERGIEVERTEILNETZ UND VERFAHREN ZU DESSEN BETRIEB**

ENERGY DISTRIBUTION NETWORK AND A METHOD FOR OPERATING SAME

RÉSEAU DE DISTRIBUTION D'ÉNERGIE ET SON PROCEDE DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.02.2016 Patentblatt 2016/05**

(73) Patentinhaber: **Siemens Aktiengesellschaft 80333 München (DE)**

(72) Erfinder: **DZAFIC, Izudin 71000 Sarajevo (BA)**

(56) Entgegenhaltungen:
**EP-A2- 0 495 590  WO-A1-2012/139656
DE-A1-102007 004 530  US-A1- 2011 125 337**

**Beschreibung**

Die Erfindung bezieht sich auf ein Verfahren zum Betreiben eines Energieverteilnetzes, bei dem die Verteilung der Energie mit zumindest einer Steuereinrichtung überwacht wird und zur Optimierung des Betriebszustands des Energieverteilnetzes Veränderungsaktionen durchgeführt werden, die den Betriebszustand des Energieverteilnetzes verbessern sollen. Derartige Betriebsverfahren sind im Bereich der Energieverteilung bekannt: Beispielsweise werden im Falle eines Kurzschlusses Schalter geöffnet, um das Netz vor einer Überlastung oder Zerstörung zu schützen.

Aus der Druckschrift EP0495590 A2 ist ein Stufenschalter für einen Transformator bekannt, der derart gesteuert wird, dass einerseits eine vorgegebene Spannung eingehalten wird und andererseits möglichst wenige Schaltvorgänge des Stufenschalters vorgenommen werden.

Ferner ist die Druckschrift US 2011/0125337 A1 bekannt, einer Energieverbrauchssteuereinrichtung für einen Haushalt derart zu betreiben, dass unter Berücksichtigung von zeitabhängigen Energiepreisen und verschiedenen zeitabhängigen Betriebsmöglichkeiten für Haushaltsgeräte ein besonders kostengünstiger Betriebsmodus gewählt wird.

Der Erfindung liegt die Aufgabe zugrunde, ein Verfahren zum Betreiben eines elektrischen Energieverteilnetzes anzugeben, mit dem sich ein sicherer Betrieb und ein möglichst guter Gesamtzustand des Energieverteilnetzes erreichen lassen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die Steuereinrichtung vor Durchführung einer Veränderungsaktion prüft, ob das Maß der Verbesserung des Betriebszustands des Energieverteilnetzes das Maß der durch die Durchführung der Veränderungsaktion bewirkten Abnutzung des Energieverteilnetzes überwiegt, und die Veränderungsaktion nur durchführt, wenn dies der Fall ist.

Ein wesentlicher Vorteil des erfindungsgemäßen Verfahrens ist darin zu sehen, dass sich das Energieverteilnetz selbsttätig umkonfigurieren kann. Aufgrund der erfindungsgemäß vorgesehenen Eignung der Steuereinrichtung, selbsttätig prüfen zu können, ob eine Veränderung der Netzkonfiguration von Vorteil ist, kann eine optimale Netzkonfiguration schnell und einfach in automatisierter Weise erreicht werden.

Ein weiterer wesentlicher Vorteil des erfindungsgemäßen Verfahrens besteht darin, dass bei der Prüfung der Frage, ob sich eine Veränderungsaktion empfiehlt, das Maß der durch die Durchführung der Veränderungsaktion bewirkten Abnutzung des Energieverteilnetzes berücksichtigt wird. Veränderungsaktionen lassen sich somit auf Fälle beschränken, bei denen die jeweilige Veränderungsaktion die dadurch hervorgerufene Abnutzung des Netzes bzw. derer Komponenten tatsächlich überkompensiert. Hierzu gibt die Steuereinrichtung vor Durchführung einer Veränderungsaktion eine Verbesserungsgröße an, die das Maß der Verbesserung des Betriebszustands des Energieverteilnetzes angibt, und bestimmt eine Abnutzungsgröße, die die durch die Durchführung der Veränderungsaktion hervorgerufene Abnutzung angibt.

Vorzugsweise wird die Steuereinrichtung die Verbesserungsgröße mit der Abnutzungsgröße vergleichen und die Veränderungsaktion blockieren, wenn die Verbesserungsgröße die Abnutzungsgröße unterschreitet.

Als besonders vorteilhaft wird es angesehen, wenn die Steuereinrichtung die Verbesserungsgröße bestimmt, indem sie einen Verbesserungswert, der die mit der Veränderungsaktion erwartete instantane Betriebszustandsverbesserung quantitativ angibt, mit einem Zeitwert multipliziert, der die Zeitspanne angibt, für die das Anhalten der Betriebszustandsverbesserung prognostiziert wird.

Da bei einer Veränderung eines Netzes in der Regel Schalter umgeschaltet werden müssen, wird sich die Abnutzung des Netzes beim Umkonfigurieren bzw. beim Verändern des Netzes besonders bei den Schaltern bemerkbar machen. Es wird daher als vorteilhaft angesehen, wenn die Steuereinrichtung vor Durchführung einer Veränderungsaktion alle Schalter des Energieverteilnetzes ermittelt, die für die Durchführung der Veränderungsaktion umgeschaltet werden müssen, und die Abnutzungsgröße unter Berücksichtigung der Abnutzung der ermittelten Schalter pro Schaltvorgang bestimmt.

Vorzugsweise wird die Steuereinrichtung die Abnutzungsgröße durch Addition der schalterindividuellen Abnutzungswerte der am Schaltvorgang beteiligten Schalter ermitteln.

Bevorzugt wird die Steuereinrichtung außerdem eine Entlastungsgröße ermitteln, die die durch die Veränderungsaktion erwartete Verschleißreduktion des Energieverteilnetzes im weiteren Betrieb angibt; die Verbesserungsgröße wird in einem solchen Falle vorzugsweise unter Berücksichtigung der Entlastungsgröße bestimmt.

Der tatsächliche Verbesserungseffekt nach einer Veränderung kann darüber hinaus mit dem zuvor erwarteten Verbesserungseffekt verglichen werden, um die Qualität der bei der Durchführung des Verfahrens herangezogenen Parameter zu prüfen. Demgemäß wird es als vorteilhaft angesehen, wenn die Steuereinrichtung Veränderungsaktionen anhand von Parametern, die das Energieverteilnetz beschreiben, ermittelt und nach Durchführung einer Veränderungsaktion jeweils prüft, ob die erwartete Verbesserung des Betriebszustands des Energieverteilnetzes eingetreten ist, und ein Fehlersignal, das fehlerhafte Parameter anzeigt, erzeugt, wenn die erwartete Verbesserung nicht eingetreten ist oder das Maß der Verbesserung eine vorgegebene Schwelle unterschreitet.

Die Steuereinrichtung wird das Energieverteilnetz vorzugsweise auf der Basis eines wirkleistungsbasierten Steuerverfahrens, insbesondere eines sogenannten Var-Verfahrens, steuern.

Das Energieverteilnetz ist vorzugsweise ein Teilnetz, das einer Unterstation zugeordnet ist und einen Bestandteil eines Gesamtnetzes bildet. In einem solchen Falle wird es als vorteilhaft angesehen, wenn die Steuereinrichtung als Teil der Unterstationen in einem Optimierungsmodus betrieben wird, in dem sie zur Optimierung des Betriebs des Teilnetzes oder des Gesamtnetzes Veränderungsaktionen durchführt.

Die Erfindung bezieht sich außerdem auf ein Energieverteilnetz mit mindestens einer Steuereinrichtung zum Betreiben des Energieverteilnetzes, wobei die Steuereinrichtung geeignet ist, die Verteilung der Energie zu steuern und zur Optimierung des Betriebszustands des Energieverteilnetzes Veränderungsaktionen durchzuführen, die den Betriebszustand des Energieverteilnetzes verbessern sollen.

Erfindungsgemäß ist diesbezüglich vorgesehen, dass die Steuereinrichtung eine Recheneinrichtung aufweist, die derart programmiert ist, dass sie vor Durchführung einer Veränderungsaktion prüft, ob das Maß der Verbesserung des Betriebszustands des Energieverteilnetzes das Maß der durch die Durchführung der Veränderungsaktion bewirkten Abnutzung des Energieverteilnetzes überwiegt, und die Veränderungsaktion nur durchführt, wenn dies der Fall ist.

Als vorteilhaft wird es angesehen, wenn das Energieverteilnetz mindestens zwei Unterstationen, die jeweils ein Teilnetz des Energieverteilnetzes mit Energie versorgen können, und eine den Unterstationen übergeordnete Zentraleinrichtung aufweist.

Vorzugsweise wird die Steuereinrichtung eine Steuereinrichtung einer der Unterstationen oder alternativ einen Bestandteil der Zentraleinrichtung bilden.

Die Erfindung wird nachfolgend anhand von Ausführungsbeispielen näher erläutert; dabei zeigen beispielhaft

Fig. 1    ein Energieverteilnetz, anhand dessen ein erstes Ausführungsbeispiel für das erfindungsgemäße Verfahren beispielhaft erläutert wird, und

Fig. 2    ein Energieverteilnetz, anhand dessen ein zweites Ausführungsbeispiel für das erfindungsgemäße Verfahren beispielhaft erläutert wird.

In den Figuren werden der Übersicht halber für identische oder vergleichbare Komponenten stets dieselben Bezugszeichen verwendet.

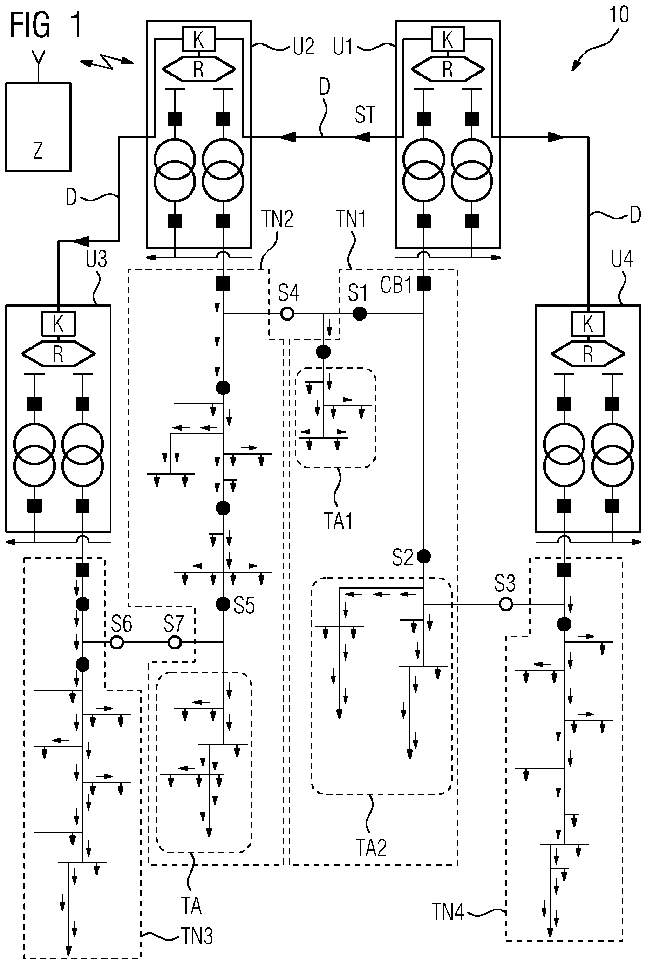

In der Figur 1 sieht man ein Energieverteilnetz 10, von dem in der Figur 1 vier Teilnetze TN1, TN2, TN3 und TN4 dargestellt sind.

Das erste Teilnetz TN1 wird von einer Unterstation U1 mit elektrischer Energie versorgt und weist einen ersten Teilabschnitt TA1 sowie einen zweiten Teilabschnitt TA2 auf. Die beiden Teilabschnitte TA1 und TA2 des ersten Teilnetzes TN1 sind über eingeschaltete Schalter CB1, S1 und S2 elektrisch mit der Unterstation U1 verbunden. Aufgrund des eingeschalteten Zustands (in den Figuren durch schwarze Kreise oder Quadrate dargestellt) der drei Schalter CB1, S1 und S2 kann Energie der Unterstation U1 zu den beiden Teilabschnitten TA1 und TA2 fließen und/oder Energie von der Unterstation U1 aus den Teilabschnitten entnommen werden.

In entsprechender Weise sind die Teilnetze TN2, TN3 und TN4 mit den Unterstationen U2, U3 und U4 verbunden und können über diese mit Energie versorgt werden. Die Teilnetze TN2, TN3 und TN4 oder deren Teilabschnitte stehen u. a. über Schalter S3, S4, S5, S6 und S7 miteinander in Verbindung; in den Figuren sind bei diesen Schaltern geschlossene Schalterzustände durch schwarze Kreise und offene Schalterzustände durch weiße Kreise dargestellt.

Die vier Unterstationen U1, U2, U3 und U4 weisen jeweils eine Kommunikationseinrichtung K auf, die eine unmittelbare Kommunikation mit anderen Unterstationen ermöglicht. Mit den Kommunikationseinrichtungen K steht jeweils eine Steuereinrichtung in Form einer Recheneinrichtung R in Verbindung, die derart programmiert ist, dass sie die nachfolgend beschriebenen Funktionen ausführen kann. Die vier Unterstationen U1, U2, U3 und U4 stehen über Datenleitungen D miteinander in Verbindung, so dass sie über diese Datenleitungen D Daten unmittelbar miteinander austauschen können. Drahtgebunden oder über Funk stehen die vier Unterstationen U1, U2, U3 und U4 außerdem mit einer Zentraleinrichtung Z in Verbindung.

Die Arbeitsweise des Energieverteilnetzes 10 soll nun nachfolgend anhand eines Ausführungsbeispiels näher erläutert werden. Dabei wird beispielhaft davon ausgegangen, dass die Unterstation U1 in einem Optimierungsmodus betrieben wird, in dem sie zur Optimierung des Betriebs des Teilnetzes TN1 und/oder des gesamten Energieverteilnetzes 10 eine Veränderungsaktion, die die Unterstation U1 in dem ihr zugeordneten Teilnetz TN1 vornehmen könnte, auf deren Wirkung auf den Betriebszustand des Teilnetzes TN1 und/oder des gesamten Energieverteilnetzes 10 untersucht.

Bei dem in Figur 1 gezeigten Zustand des Energieverteilnetzes 10 versorgt die Unterstation U1 die beiden Teilabschnitte TA1 und TA2 des Teilnetzes TN1 mit Energie. Im Rahmen der Optimierung des Betriebs des gesamten Energieverteilnetzes 10 kann die Unterstation U1 beispielsweise überprüfen, ob eine Umkonfigurierung der Teilnetze bzw. eine Neuzuordnung der Teilabschnitte TA1 bzw. TA2 zu anderen Teilnetzen als dem Teilnetz TN1 eine Verbesserung des Gesamtzustands des Teilnetzes TN1 und/oder des Energieverteilnetzes 10 herbeiführen könnte.

Um dies festzustellen, kann die Unterstation U1 beispielsweise zunächst prüfen, ob eine Neuzuordnung des Teilabschnitts TA1 zu dem Teilnetz TN2 der Unterstation U2 eine Verbesserung bewirken würde oder nicht. Eine solche Prüfung kann beispielsweise wie folgt aussehen:

Zunächst wird die Steuereinrichtung in Form der Recheneinrichtung R der Unterstation U1 vor Durchführung einer Veränderungsaktion prüfen, ob das Maß der Verbesserung des Betriebszustands des Teilnetzes TN1 und/oder des Energieverteilnetzes 10 das Maß der durch die Durchführung der Veränderungsaktion bewirkten Abnutzung des Teilnetzes TN1 und/oder des Energieverteilnetzes 10 überwiegt, und die Veränderungsaktion nur durchführen, wenn dies der Fall ist.

Das Maß der Verbesserung des Betriebszustands des Teilnetzes TN1 und/oder des Energieverteilnetzes 10 kann beispielsweise wie folgt bestimmt werden:

$$M1 = (Ploss1-Ploss2) * (t2-t1) * energyPrice(t)$$

wobei angeben:

M1 eine Verbesserungsgröße, die das Maß der Verbesserung des Betriebszustands definiert,
Ploss1 den Energieverlust in dem Energieverteilnetz 10 vor dem Umschalten,
Ploss2 den Energieverlust in dem Energieverteilnetz 10 nach dem Umschalten,
(Ploss1-Ploss2) die Differenz zwischen dem Energieverlust in dem Teilnetz TN1 und/oder dem Energieverteilnetz 10 vor dem Umschalten und nach dem Umschalten und somit eine instantane Betriebszustandsverbesserung durch das Umschalten, energyPrice(t) die aktuellen Energiekosten und
(t2-t1) eine Zeitspanne, für die das Anhalten der Betriebszustandsverbesserung prognostiziert wird.

Das Maß der Abnutzung des Teilnetzes TN1 und/oder des Energieverteilnetzes 10 ergibt sich bei dem Beispiel durch die Abnutzung der beiden Schalter S1 und S4, die für die Neuzuordnung umgeschaltet werden müssen; es gilt hier also:

$$M2 = A1 + A2, wobei$$

angeben:

M2 eine Abnutzungsgröße, die die durch die Durchführung der Veränderungsaktion hervorgerufene Abnutzung angibt,
A1 die Abnutzung des Schalters S1 (z. B. in Form eines monetären Wertverlustes pro Schaltvorgang) und
A2 die Abnutzung des Schalters S2 (z. B. in Form eines monetären Wertverlustes pro Schaltvorgang).

Sobald die Verbesserungsgröße M1 und die Abnutzungsgröße M2 ermittelt worden sind, wird die Recheneinrichtung R der Unterstation U1 prüfen, ob die Verbesserung die Abnutzung überwiegt, also ob gilt:

$$M1 > M2.$$

Ist diese Bedingung erfüllt, wird die Recheneinrichtung R der Unterstation U1 die Umschaltung der Schalter S1 und S4 (z. B. durch Übersenden eines Steuersignals ST an die Unterstation U2) veranlassen.

Vorzugsweise wird die Recheneinrichtung R der Unterstation U1 auch prüfen, ob durch das Umschalten Komponenten des Teilnetzes TN1 und/oder des Energieverteilnetzes 10 entlastet werden und ggf. eine Entlastungsgröße ermitteln, die die durch die Veränderungsaktion erwartete Verschleißreduktion des Energieverteilnetzes im weiteren Betrieb angibt, und die Verbesserungsgröße M2 zusätzlich unter Berücksichtigung der Entlastungsgröße bestimmen.

Auch kann die Recheneinrichtung R der Unterstation U1 nach Durchführung einer Veränderungsaktion jeweils prüfen, ob die erwartete Verbesserung des Betriebszustands des Teilnetzes TN1 und/oder des Energieverteilnetzes 10 eingetreten ist, und ein Fehlersignal, das fehlerhafte Parameter anzeigt, erzeugen, wenn die erwartete Verbesserung nicht eingetreten ist oder das Maß der Verbesserung eine vorgegebene Schwelle unterschreitet.

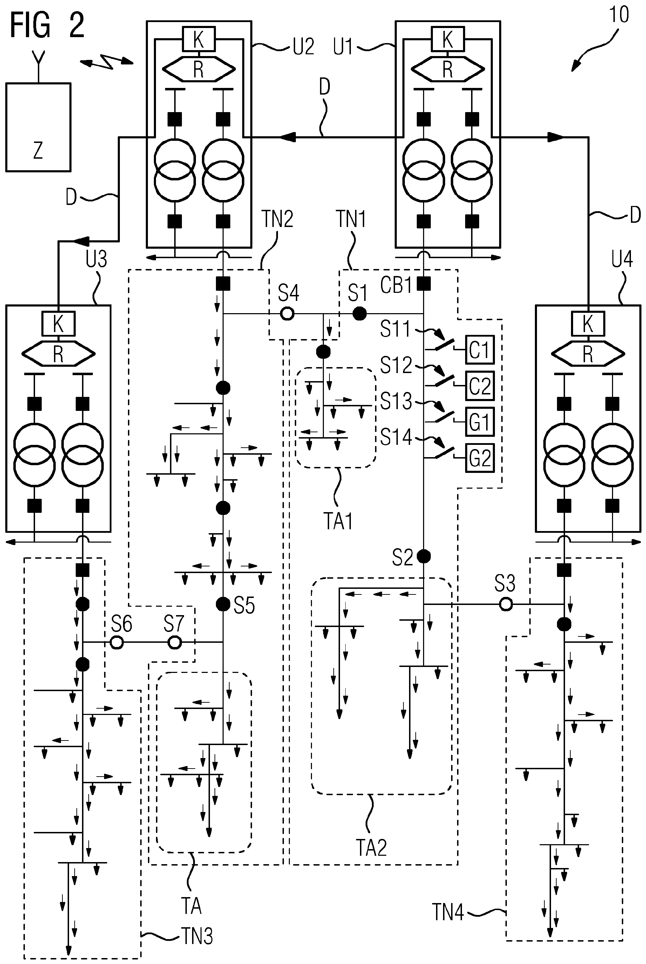

Die Figur 2 zeigt ein modifiziertes Energieverteilnetz 10, bei dem in dem Teilnetz TN1 zusätzlich zuschaltbare Generatoren G1 und G2 und zuschaltbare kapazitive Lasten C1 und C2 vorhanden sind. Nachfolgend wird beispielhaft angenommen, dass die Recheneinrichtung R der Unterstation U1 das Teilnetz TN1 gemäß einem VVC-Verfahren (Voltage Var-Verfahren) steuert.

Stellt die Recheneinrichtung R der Unterstation U1 während des Betriebs ihres Teilnetzes TN1 fest, dass vorgegebene Netzparameter (z. B. maximale Spannungsschwankungen, maximale Frequenzschwankungen, maximale Blindleistung im Netz, maximales Verhältnis zwischen Blindleistung und Wirkleistung im Netz, maximale Strombelastung des Netzes) nicht oder nicht in ausreichendem Maße eingehalten werden, so wird sie untersuchen, ob durch das Zuschalten eines der beiden Generatoren G1 oder G2 oder beider Generatoren G1 und G2 und/oder durch das Zuschalten einer der beiden kapazitiven Lasten C1 oder C2 oder beider kapazitiver Lasten C1 und C2 die vorgegebenen Netzparameter besser eingehalten werden und sich eine Veränderungsaktion lohnt. Eine solche Veränderungsaktion würde das Schließen eines oder mehrerer der Schalter S11, S12, S13 oder S14 betreffen und diese abnutzen. Auch würden sich die in Betrieb gehenden Generatoren G1 und G2 und/oder die zugeschalteten kapazitiven Lasten C1 und C2 abnutzen.

Das Maß der Verbesserung des Betriebszustands des Energieverteilnetzes kann beispielsweise wie folgt bestimmt werden:

$$M1 = (Netzzustand2 - Netzzustand1) * (t2-t1) * Ersparnisfaktor(t)$$

wobei angeben:

M1 eine Verbesserungsgröße, die das Maß der Verbesserung des Betriebszustands definiert,
Netzzustand1 eine den Netzzustand in dem Energieverteilnetz 10 vor dem Umschalten angebende Zustandsgröße,
Netzzustand2 eine den Netzzustand in dem Energieverteilnetz 10 nach dem Umschalten angebende Zustandsgröße,
(Netzzustand2 - Netzzustand1) eine instantane Betriebszustandsverbesserung durch das Umschalten,
Ersparnisfaktor(t) einen auf den Grad der Betriebszustandsverbesserung normierten Faktor, der die bezogene Kostenersparnis (z. B. als monetäre Größe) definiert, und
(t2-t1) eine Zeitspanne, für die das Anhalten der Betriebszustandsverbesserung prognostiziert wird.

Die in dem Ersparnisfaktor(t) normiert berücksichtigte Kostenersparnis kann beispielsweise berücksichtigen, dass Komponenten des Energieverteilnetzes 10 vor dem Umschalten bzw. vor der Veränderung der Konfiguration des Teilnetzes TN1 überlastet sind und/oder in einem nicht optimalen Betriebszustand betrieben werden und somit ihre Lebensdauer reduziert ist und ihre Betriebskosten unnötig erhöht sind. Zusätzlich oder alternativ können in dem Parameter "Ersparnisfaktor(t)" auch Strafgebühren berücksichtigt werden, die der Betreiber des Teilnetzes TN1 oder des Energieverteilnetzes 10 wegen Nichteinhaltens der oben erwähnten vorgegebenen Netzparameter in Abhängigkeit von dem Grad der Abweichung an seine Kunden bezahlen muss.

Das Maß der Abnutzung des Energieverteilnetzes 10 durch das Durchführen der Veränderungsaktion ergibt sich bei dem Beispiel durch die Abnutzung der unzuschaltenden Schalter S11 bis S14 und die Abnutzung der zugeschalteten Komponenten während des Betriebs, im schlimmsten Falle ergäbe sich hier also :

$$M2 = A11 + A12 + A13 + A14 + Ag1 + Ag2 + Ac1 + Ac2,$$

wobei angeben:

M2 eine Abnutzungsgröße, die die durch die Durchführung der Veränderungsaktion hervorgerufene Abnutzung angibt,
A11 die Abnutzung des Schalters S11 beim einmaligen Umschalten,
A12 die Abnutzung des Schalters S12 beim einmaligen Umschalten,
A13 die Abnutzung des Schalters S13 beim einmaligen Umschalten,
A14 die Abnutzung des Schalters S14 beim einmaligen Umschalten,
Ag1 die Abnutzung des Generators G1 während des Betriebs in der Zeitspanne t2-t1,
Ag2 die Abnutzung des Generators G2 während des Betriebs in der Zeitspanne t2-t1,
Ac1 die Abnutzung der kapazitiven Last C1 während des Betriebs in der Zeitspanne t2-t1 und
Ac2 die Abnutzung der kapazitiven Last C2 während des Betriebs in der Zeitspanne t2-t1.

Alternativ zu der Abnutzung oder zusätzlich zu der Abnutzung können die Parameter Ag1, Ag2, Ac1 und Ac2 auch die Betriebskosten der Komponenten während des Betriebs in der Zeitspanne t2-t1 berücksichtigen, beispielsweise die Kosten der Energieerzeugung im Falle der Generatoren und/oder die Kosten für das Bereitstellen der Komponenten, beispielsweise falls diese von Drittanbietern gemietet werden müssen.

Selbstverständlich sind bei der Bestimmung der Abnutzungsgröße M2, insbesondere auch im Falle der Berücksichtigung von internen oder externen Betriebskosten, nur diejenigen Schalter, Generatoren und kapazitiven Lasten zu berücksichtigen, die tatsächlich umgeschaltet oder benutzt werden.

Sobald die Verbesserungsgröße M1 und die Abnutzungsgröße M2 ermittelt worden sind, wird die Recheneinrichtung R der Unterstation U1 prüfen, ob die Verbesserung die Abnutzung überwiegt, also ob gilt:

$$M1 > M2.$$

Ist diese Bedingung erfüllt, wird die Recheneinrichtung R der Unterstation U1 die Umschaltung eines der Schalter, einiger Schalter oder aller Schalter S11 bis S14 veranlassen.

Auch kann die Recheneinrichtung R der Unterstation U1 - wie bei dem Ausführungsbeispiel gemäß Figur 1 - nach Durchführung einer Veränderungsaktion jeweils prüfen, ob die erwartete Verbesserung des Betriebszustands des Energieverteilnetzes eingetreten ist, und ein Fehlersignal, das fehlerhafte Parameter anzeigt, erzeugen, wenn die erwartete Verbesserung nicht eingetreten ist oder das Maß der Verbesserung eine vorgegebene Schwelle unterschreitet.

Bezugszeichenliste

| 10 | Energieverteilnetz |
|---|---|
| C1 | kapazitive Last |
| C2 | kapazitive Last |
| CB1 | Schalter |
| D | Datenleitung |
| G1 | Generator |
| G2 | Generator |
| K | Kommunikationseinrichtung |
| R | Recheneinrichtung |
| S1-S7 | Schalter |
| S11-S14 | Schalter |
| ST | Steuersignal |
| TA1 | Teilabschnitt |
| TA2 | Teilabschnitt |
| TN1 | Teilnetz |
| TN2 | Teilnetz |
| TN3 | Teilnetz |
| TN4 | Teilnetz |
| U1 | Unterstation |
| U2 | Unterstation |
| U3 | Unterstation |
| U4 | Unterstation |
| Z | Zentraleinrichtung |

**Patentansprüche**

1. Verfahren zum Betreiben eines elektrischen Energieverteilnetzes (10), bei dem die Verteilung der Energie mit zumindest einer Steuereinrichtung überwacht wird und zur Optimierung des Betriebszustands des Energieverteilnetzes (10) Veränderungsaktionen durchgeführt werden, die den Betriebszustand des Energieverteilnetzes (10) verbessern sollen, wobei

die Steuereinrichtung vor Durchführung einer Veränderungsaktion prüft, ob das Maß der Verbesserung des Betriebszustands des Energieverteilnetzes das Maß der durch die Durchführung der Veränderungsaktion bewirkten Abnutzung des Energieverteilnetzes überwiegt, und die Veränderungsaktion nur durchführt, wenn dies der Fall ist,

**dadurch gekennzeichnet, dass**

die Steuereinrichtung die Verbesserung und die Abnutzung unter Berücksichtigung mehrerer Schalter im Energieverteilnetz ermittelt, und dass

die Steuereinrichtung vor Durchführung einer Veränderungsaktion eine Verbesserungsgröße, die das Maß der Verbesserung des Betriebszustands des Energieverteilnetzes (10) angibt, und eine Abnutzungsgröße bestimmt, die die durch die Durchführung der Veränderungsaktion hervorgerufene Abnutzung angibt,

wobei sich die Verbesserungsgröße aus der Differenz eines Energieverlustes im Energieverteilnetz vor der Veränderungsaktion und nach der Veränderungsaktion unter Berücksichtung aktueller Energiekosten sowie einer Zeitspanne ergibt, für die das Anhalten der Betriebszustandsverbesserung prognostiziert wird, und

wobei sich die Abnutzungsgröße aus einer Summe der durch die Veränderungsaktion bedingten Abnutzung mit Wertverlust der mehreren Schalter ergibt.

2. Verfahren nach Anspruch 1,
   **dadurch gekennzeichnet, dass**

   - die Steuereinrichtung die Verbesserungsgröße mit der Abnutzungsgröße vergleicht und
   - die Veränderungsaktion blockiert, wenn die Verbesserungsgröße die Abnutzungsgröße unterschreitet.

3. Verfahren nach Anspruch 1 oder 2,
   **dadurch gekennzeichnet, dass**
   die Steuereinrichtung die Verbesserungsgröße bestimmt, indem sie einen Verbesserungswert, der die mit der Veränderungsaktion erwartete instantane Betriebszustandsverbesserung quantitativ angibt, mit einem Zeitwert multipliziert, der die Zeitspanne angibt, für die das Anhalten der Betriebszustandsverbesserung prognostiziert wird.

4. Verfahren nach einem der voranstehenden Ansprüche,
   **dadurch gekennzeichnet, dass**

   - die Steuereinrichtung vor Durchführung einer Veränderungsaktion alle Schalter (S1-S7) des Energieverteilnetzes (10) ermittelt, die für die Durchführung der Veränderungsaktion umgeschaltet werden müssen, und
   - die Abnutzungsgröße unter Berücksichtigung der Abnutzung der ermittelten Schalter (S1-S7) pro Schaltvorgang bestimmt.

5. Verfahren nach Anspruch 4,
   **dadurch gekennzeichnet, dass**
   die Steuereinrichtung die Abnutzungsgröße durch Addition der schalterindividuellen Abnutzungswerte der am Schaltvorgang beteiligten Schalter (S1-S7) ermittelt.

6. Verfahren nach einem der voranstehenden Ansprüche,
   **dadurch gekennzeichnet, dass**

   - die Steuereinrichtung eine Entlastungsgröße ermittelt, die die durch die Veränderungsaktion erwartete Verschleißreduktion des Energieverteilnetzes (10) im weiteren Betrieb angibt, und
   - die Verbesserungsgröße unter Berücksichtigung der Entlastungsgröße bestimmt.

7. Verfahren nach einem der voranstehenden Ansprüche,
   **dadurch gekennzeichnet, dass**

   - die Steuereinrichtung Veränderungsaktionen anhand von Parametern, die das Energieverteilnetz (10) beschreiben, ermittelt und
   - nach Durchführung einer Veränderungsaktion jeweils prüft, ob die erwartete Verbesserung des Betriebszustands des Energieverteilnetzes (10) eingetreten ist, und
   - ein Fehlersignal, das fehlerhafte Parameter anzeigt, erzeugt, wenn die erwartete Verbesserung nicht eingetreten ist oder das Maß der Verbesserung eine vorgegebene Schwelle unterschreitet.

8. Verfahren nach einem der voranstehenden Ansprüche,
   **dadurch gekennzeichnet, dass**
   die Steuereinrichtung das Energieverteilnetz (10) mit einem wirkleistungsbasierten Steuerverfahren steuert.

9. Verfahren nach einem der voranstehenden Ansprüche,
**dadurch gekennzeichnet, dass**

- das Energieverteilnetz (10) ein Teilnetz (TN1, TN2, TN3, TN4) ist, das einer Unterstation (U1, U2, U3, U4) zugeordnet ist und einen Bestandteil eines Gesamtnetzes bildet, und
- die Steuereinrichtung als Teil der Unterstationen (U1, U2, U3, U4) in einem Optimierungsmodus betrieben wird, in dem sie zur Optimierung des Betriebs des Teilnetzes (TN1, TN2, TN3, TN4) oder des Gesamtnetzes Veränderungsaktionen durchführt.

10. Elektrisches Energieverteilnetz (10) mit mindestens einer Steuereinrichtung zum Betreiben des Energieverteilnetzes (10), wobei die Steuereinrichtung geeignet ist, die Verteilung der Energie zu steuern und zur Optimierung des Betriebszustands des Energieverteilnetzes (10) Veränderungsaktionen durchzuführen, die den Betriebszustand des Energieverteilnetzes (10) verbessern sollen, wobei
die Steuereinrichtung eine Recheneinrichtung (R) aufweist, die derart programmiert ist, dass sie vor Durchführung einer Veränderungsaktion prüft, ob das Maß der Verbesserung des Betriebszustands des Energieverteilnetzes (10) das Maß der durch die Durchführung der Veränderungsaktion bewirkte Abnutzung des Energieverteilnetzes (10) überwiegt, und die Veränderungsaktion nur durchführt, wenn dies der Fall ist,
**dadurch gekennzeichnet, dass**
die Steuereinrichtung ausgebildet ist, die Verbesserung und die Abnutzung unter Berücksichtigung mehrerer Schalter im Energieverteilnetz zu ermitteln, und dass
die Steuereinrichtung ausgebildet ist, vor Durchführung einer Veränderungsaktion eine Verbesserungsgröße, die das Maß der Verbesserung des Betriebszustands des Energieverteilnetzes (10) angibt, und eine Abnutzungsgröße zu bestimmen, die die durch die Durchführung der Veränderungsaktion hervorgerufene Abnutzung angibt,
wobei sich die Verbesserungsgröße aus der Differenz eines Energieverlustes im Energieverteilnetz vor der Veränderungsaktion und nach der Veränderungsaktion unter Berücksichtung aktueller Energiekosten sowie einer Zeitspanne ergibt, für die das Anhalten der Betriebszustandsverbesserung prognostiziert wird, und
wobei sich die Abnutzungsgröße aus einer Summe der durch die Veränderungsaktion bedingten Abnutzung mit Wertverlust der mehreren Schalter ergibt.

11. Energieverteilnetz (10) nach Anspruch 10,
**dadurch gekennzeichnet, dass**
das Energieverteilnetz (10) mindestens zwei Unterstationen (U1, U2, U3, U4), die jeweils ein Teilnetz (TN1, TN2, TN3, TN4) des Energieverteilnetzes (10) mit Energie versorgen können, und eine den Unterstationen (U1, U2, U3, U4) übergeordneten Zentraleinrichtung (Z) aufweist.

12. Energieverteilnetz (10) nach Anspruch 11,
**dadurch gekennzeichnet, dass**
die Steuereinrichtung eine Steuereinrichtung einer der Unterstationen (U1, U2, U3, U4) bildet.

13. Energieverteilnetz (10) nach Anspruch 12,
**dadurch gekennzeichnet, dass**
die Steuereinrichtung einen Bestandteil der Zentraleinrichtung (Z) bildet.

**Claims**

1. Method for operating an electric power distribution network (10), in which the distribution of the power is monitored using at least one control device and the operating state of the power distribution network (10) is optimized by performing alteration actions that are intended to improve the operating state of the power distribution network (10), wherein
the control device precedes performance of an alteration action with a check to determine whether the extent of the improvement in the operating state of the power distribution network outweighs the extent of the wear on the power distribution network that is caused by the performance of the alteration action, and performs the alteration action only if this is the case, **characterized in that** the control device ascertains the improvement and the wear by taking into consideration multiple switches in the power distribution network, and **in that** the control device precedes performance of an alteration action with determination of an improvement variable, which indicates the extent of the improvement in the operating state of the power distribution network (10), and a wear variable, which indicates the wear brought about by the performance of the alteration action,

the improvement variable being obtained from the difference in a loss of power in the power distribution network before the alteration action and after the alteration action taking into consideration present energy costs and a period of time for which the operating state improvement is forecast to last, and the wear variable being obtained from a sum of the wear due to the alteration action with a loss of values for the multiple switches.

2. Method according to Claim 1,
   **characterized in that**

   - the control device compares the improvement variable with the wear variable and
   - blocks the alteration action if the improvement variable is below the wear variable.

3. Method according to Claim 1 or 2,
   **characterized in that**
   the control device determines the improvement variable by multiplying an improvement value, which quantitatively indicates the instantaneous operating state improvement that is expected with the alteration action, by a time value, which indicates the period of time for which the continued existence of the operating state improvement is forecast.

4. Method according to one of the preceding claims,
   **characterized in that**

   - the control device precedes performance of an alteration action with ascertainment of all the switches (S1 - S7) in the power distribution network (10) that need to be changed over for the performance of the alteration action, and
   - determines the wear variable by taking account of the wear on the ascertained switches (S1-S7) per switching operation.

5. Method according to Claim 4,
   **characterized in that**
   the control device ascertains the wear variable by adding the switch-individual wear values from the switches (S1-S7) involved in the switching operation.

6. Method according to one of the preceding claims,
   **characterized in that**

   - the control device ascertains an unloading variable, which indicates the wear reduction on the power distribution network (10) during further operation that is expected as a result of the alteration action, and
   - determines the improvement variable by taking account of the unloading variable.

7. Method according to one of the preceding claims,
   **characterized in that**

   - the control device ascertains alteration actions on the basis of parameters that describe the power distribution network (10) and
   - follows performance of an alteration action with a respective check to determine whether the expected improvement in the operating state of the power distribution network (10) has occurred, and
   - produces an error signal, which indicates erroneous parameters, if the expected improvement has not occurred or the extent of the improvement is below a prescribed threshold.

8. Method according to one of the preceding claims,
   **characterized in that**
   the control device controls the power distribution network (10) using an active-power-based control method.

9. Method according to one of the preceding claims,
   **characterized in that**

   - the power distribution network (10) is a subnetwork (TN1, TN2, TN3, TN4) that is associated with a substation (U1, U2, U3, U4) and forms part of an overall network, and
   - the control device as part of the substations (U1, U2, U3, U4) is operated in an optimization mode in which it optimizes the operation of the subnetwork (TN1, TN2, TN3, TN4) or of the overall network by performing alteration actions.

10. Electric power distribution network (10) having at least one control device for operating the power distribution network (10), wherein the control device is suitable for controlling the distribution of the power and for optimizing the operating state of the power distribution network (10) by performing alteration actions that are intended to improve the operating state of the power distribution network (10), wherein
the control device has a computation device (R) that is programmed such that it precedes performance of an alteration action with a check to determine whether the extent of the improvement in the operating state of the power distribution network (10) outweighs the extent of the wear on the power distribution network (10) that is caused by the performance of the alteration action, and performs the alteration action only if this is the case, **characterized in that**
the control device is designed to ascertain the improvement and the wear by taking into consideration multiple switches in the power distribution network, and **in that** the control device is designed to precede performance of an alteration action with determination of an improvement variable, which indicates the extent of the improvement in the operating state of the power distribution network (10), and a wear variable, which indicates the wear brought about by the performance of the alteration action, the improvement variable being obtained from the difference in a loss of power in the power distribution network before the alteration action and after the alteration action taking into consideration present energy costs and a period of time for which the operating state improvement is forecast to last, and
the wear variable being obtained from a sum of the wear due to the alteration action with a loss of values for the multiple switches.

11. Power distribution network (10) according to Claim 10, **characterized in that**
the power distribution network (10) has at least two substations (U1, U2, U3, U4), which can each supply power to a subnetwork (TN1, TN2, TN3, TN4) of the power distribution network (10), and a central device (Z) that is superordinate to the substations (U1, U2, U3, U4).

12. Power distribution network (10) according to Claim 11, **characterized in that**
the control device forms a control device for one of the substations (U1, U2, U3, U4).

13. Power distribution network (10) according to Claim 12, **characterized in that**
the control device forms part of the central device (Z).

**Revendications**

1. Procédé pour faire fonctionner un réseau (10) de distribution d'énergie électrique, dans lequel on contrôle la distribution d'énergie par au moins un dispositif de commande et, pour optimiser l'état de fonctionnement du réseau (10) de distribution d'énergie, on effectue des actions de modification qui doivent améliorer l'état de fonctionnement du réseau (10) de distribution d'énergie, dans lequel le dispositif de commande contrôle, avant d'effectuer une action de modification, si le degré de l'amélioration de l'état de fonctionnement du réseau de distribution d'énergie l'emporte sur le degré de la détérioration, provoquée par le fait d'effectuer l'action de modification, du réseau de distribution d'énergie et n'effectue l'action de modification que si cela est le cas,
**caractérisé en ce que**
le dispositif de commande détermine l'amélioration et la détérioration en tenant compte de plusieurs interrupteurs dans le réseau de distribution d'énergie, et **en ce que**
le dispositif de commande détermine, avant d'effectuer une action de modification, une grandeur d'amélioration, qui indique le degré de l'amélioration de l'état de fonctionnement du réseau (10) de distribution d'énergie et une grandeur de détérioration, qui indique la détérioration provoquée par le fait d'effectuer l'action de modification,
dans lequel la grandeur d'amélioration est donnée par la différence entre une perte d'énergie dans le réseau de distribution d'énergie avant l'action de modification et après l'action de modification, en tenant compte des coûts en cours de l'énergie, ainsi que d'un laps de temps, pendant lequel on pronostique la persistance de l'amélioration de l'état de fonctionnement, et
dans lequel la grandeur de détérioration est donnée par une somme de la détérioration provoquée par l'action de modification et de la perte de valeur des plusieurs interrupteurs.

2. Procédé suivant la revendication 1,
**caractérisé en ce que**

- le dispositif de commande compare la grandeur d'amélioration à la grandeur de détérioration et
- bloque l'action de modification, si la grandeur d'amélioration est inférieure à la grandeur de détérioration.

3. Procédé suivant la revendication 1 ou 2,
   **caractérisé en ce que**
   le dispositif de commande détermine la grandeur d'amélioration, en multipliant une valeur d'amélioration, qui indique quantitativement l'amélioration instantanée de l'état de fonctionnement escomptée par l'action de modification, par une valeur de temps, qui indique le laps de temps pendant lequel la persistance de l'amélioration de l'état de fonctionnement est pronostiquée.

4. Procédé suivant l'une des revendications précédentes, **caractérisé en ce que**

   - le dispositif de commande détermine, avant d'effectuer une action de modification, tous les interrupteurs (S1 à S7) du réseau (10) de distribution d'énergie, qui doivent être inversés pour effectuer l'action de modification, et
   - détermine la grandeur de détérioration en tenant compte de la détérioration des interrupteurs (S1 à S7) déterminés par opération de coupure.

5. Procédé suivant la revendication 4,
   **caractérisé en ce que**
   le dispositif de commande détermine la grandeur de détérioration en additionnant les valeurs de détérioration, individuelles à chaque interrupteur, des interrupteurs (S1 à S7) participant à l'opération de coupure.

6. Procédé suivant l'une des revendications précédentes, **caractérisé en ce que**

   - le dispositif de commande détermine une grandeur de décharge, qui indique la réduction d'usure, escomptée par l'action de modification, du réseau (10) de distribution d'énergie, lorsqu'il continue à fonctionner, et
   - détermine la grandeur d'amélioration en tenant compte de la grandeur de décharge.

7. Procédé suivant l'une des revendications précédentes, **caractérisé en ce que**

   - le dispositif de commande détermine des actions de modification à l'aide de paramètres, qui décrivent le réseau (10) de distribution d'énergie et
   - contrôle, après avoir effectué une action de modification, respectivement, si l'amélioration escomptée de l'état de fonctionnement du réseau (10) de distribution d'énergie s'est produite, et

   - produit un signal de défaut, qui indique des paramètres défectueux, si l'amélioration escomptée ne s'est pas produite ou si le degré de l'amélioration est inférieur à un seuil donné à l'avance.

8. Procédé suivant l'une des revendications précédentes, **caractérisé en ce que**
   le dispositif de commande commande le réseau (10) de distribution d'énergie par un procédé de commande reposant sur la puissance active.

9. Procédé suivant l'une des revendications précédentes, **caractérisé en ce que**

   - le réseau (10) de distribution d'énergie est un sous-réseau (TN1, TN2, TN3, TN4), qui est affecté à une sous-station (U1, U2, U3, U4) et qui forme une partie d'un réseau global, et
   - on fait fonctionner le dispositif de commande comme partie des sous-stations (U1, U2, U3, U4) dans un mode d'optimisation, dans lequel il effectue des actions de modification pour optimiser le fonctionnement du sous-réseau (TN1, TN2, TN3, TN4) ou du réseau global.

10. Réseau (10) de distribution d'énergie électrique, comprenant au moins un dispositif de commande pour faire fonctionner le réseau (10) de distribution d'énergie, le dispositif de commande étant propre à commander la distribution d'énergie et, pour optimiser l'état de fonctionnement du dispositif (10) de distribution d'énergie, à effectuer des actions de modification, qui doivent améliorer l'état de fonctionnement du réseau (10) de distribution d'énergie, dans lequel
    le dispositif de commande a un dispositif (R) d'ordinateur programmé de manière à contrôler, avant d'effectuer une action de modification, si le degré de l'amélioration de l'état de fonctionnement du réseau (10) de distribution d'énergie l'emporte sur le degré de la détérioration, provoquée par le fait d'effectuer l'action de modification, du réseau (10) de distribution d'énergie, et n'effectue l'action de modification que si cela est le cas,
**caractérisé en ce que**
le dispositif de commande est constitué pour déterminer l'amélioration et la détérioration, en utilisant plusieurs interrupteurs du réseau de distribution d'énergie, et **en ce que**
le dispositif de commande est constitué pour déterminer, avant d'effectuer l'action de modification, une grandeur d'amélioration, qui indique le degré de l'amélioration de l'état de fonctionnement du réseau (10) de distribution d'énergie, et une grandeur de détérioration, qui indique la détérioration provoquée par le fait d'effectuer l'action de modification,
dans lequel la grandeur d'amélioration est donnée par la différence entre une perte d'énergie dans le réseau de distribution d'énergie, avant l'action de modification et après l'action de modification, en tenant compte des coûts en cours de l'énergie, ainsi que d'un laps de temps pendant lequel on pronostique la persistance de l'amélioration de l'état de fonctionnement, et
dans lequel la grandeur de détérioration est donnée par une somme de la détérioration, provoquée par l'action de modification, et de la perte de valeur des plusieurs interrupteurs.

11. Réseau (10) de distribution d'énergie suivant la revendication 10,
**caractérisé en ce que**
le réseau (10) de distribution d'énergie a au moins deux sous-stations (U1, U2, U3, U4), qui, respectivement, peuvent alimenter en énergie un sous-réseau (TN1, TN2, TN3, TN4) du réseau (10) de distribution d'énergie, et un dispositif (Z) central supérieur hiérarchiquement aux sous-stations (U1, U2, U3, U4).

12. Réseau (10) de distribution d'énergie suivant la revendication 11,
**caractérisé en ce que**
le dispositif de commande forme un dispositif de commande de l'une des sous-stations (U1, U2, U3, U4).

13. Réseau (10) de distribution d'énergie suivant la revendication 12,
**caractérisé en ce que**
le dispositif de commande forme une partie constitutive du dispositif (Z) central.

FIG 1

FIG 2

**IN DER BESCHREIBUNG AUFGEFÜHRTE DOKUMENTE**

**In der Beschreibung aufgeführte Patentdokumente**

- EP 0495590 A2
- US 20110125337 A1